# EUROPEAN PATENT APPLICATION

(11) **EP 2 515 231 A1**
(43) Date of publication of application: **24.10.2012**
(21) Application number: 12151374.1
(22) Date of filing: 17.01.2012
(51) Int. Cl.: G06F 9/455, G06F 11/36, H04N 21/81, G06F 9/445, G06F 21/00

(54) **Broadcast receiving apparatus and method of installing service**

(30) Priority: 18.04.2011 KR 20110035861
(71) Applicant: Samsung Electronics Co., Ltd., Suwon-si, Gyeonggi-do, 443-742 (KR)
(72) Inventor: Mun, Kye-ryeon, Gyeonggi-do (KR); Choi, Young-ho, Gyeonggi-do (KR)
(74) Representative: Robinson, Ian Michael

(57) **Abstract**

A broadcast receiving apparatus is provided. The broadcast receiving apparatus includes a communication interface unit which receives a new application corresponding to a new service; a determination unit which installs the new application in the second operating system and determines whether the new application normally operates in the second operating system; and a control unit which, when the new application normally operates in the second operating system, installs the new application in the first operating system.

## Description

### CROSS-REFERENCE TO RELATED APPLICATION

This application claims priority from Korean Patent Application No. 10-2011-0035861, filed April 18, 2011 in the Korean Intellectual Property Office.

### BACKGROUND

### 1. Field

Apparatuses and methods consistent with exemplary embodiments relate to a broadcast receiving apparatus and a service installing method, and more particularly to a broadcast receiving apparatus and a service installing method for testing safety of a new application by first installing the new application in a subsidiary operating system before installing the new application in a main operating system, and only installing the new application in the main operating system when the new application has been confirmed safe.

### 2. Description of the Related Art

A broadcast receiving apparatus, which is an apparatus for receiving digital satellite broadcast, converts digital broadcast or analog broadcast transmitted from a broadcasting station, and video and audio signals input from external devices (video player, DVD player, Blue-ray disc player, etc.) to TS signals, and displays the TS signals or sends the TS signals to an external display device. Representative examples of the broadcast receiving apparatus include Internet Protocol Television such as digital TV and Video on Demand (VOD), and a set-top box.

Recent broadcast receiving apparatus are implemented based on an open platform, and users can receive various services by installing applications provided from service providers to the broadcast receiving apparatus.

However, applications without passing through sufficient tests are distributed or applications for hacking, virus, and spyware spread are distributed in some cases. When such an application is installed to the broadcast receiving apparatus, it hinders the user from using the broadcast receiving apparatus.

### SUMMARY

Exemplary embodiments overcome the above disadvantages and/or other disadvantages not described above. Also, the exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows. According to an aspect of an exemplary embodiment, there is provided a broadcast receiving apparatus and a service installing method for testing safety of a new application by first installing the new application in a subsidiary operating system before installing the new application in a main operating system, and installing the new application in the main operating system only if the new application has been confirmed safe.

A broadcast receiving apparatus having a first operating system and a second operating system, includes a communication interface unit which receives a new application corresponding to a new service; a determination unit which installs the new application in the second operating system and determines whether the new application normally operates in the second operating system; and a control unit which, when the new application normally operates in the second operating system, installs the new application in the first operating system.

The determination unit may perform at least one of a first determination operation for determining whether the new application operates without error, a second determination operation for determining whether the new application complies with a preset security policy, a third determination operation for determining whether the new application complies with a preset General Public License (GPL) policy, and a fourth determination operation for determining whether the new application belongs to a preset black list.

The first determination operation may determine whether the new application forcibly quits, whether the new application forcibly quits a kernel of the second operating system, whether the new application excessively occupies a memory allocated to the second operating system, and whether the new application forcibly quits other applications installed in the second operating system.

When the new application is installed in the first operating system, the control unit may delete the new application installed in the second operating system.

The broadcast receiving apparatus may further include a storage unit which stores the new application in a second storage region corresponding to the second operating system. When the application installed in the second operating system normally operates, the control unit may control the storage unit to store the new application stored in the second storage region, in a first storage region corresponding to the first operating system.

The control unit may manage list information of services provided by the broadcast receiving apparatus, and add the service corresponding to the new application into the list information.

The broadcast receiving apparatus may include a display unit which displays the list information. The control unit may control the display unit to display information informing that the service corresponding to the new application is deactivated until the new application is installed in the first operating system.

The first operating system and the second operating system may run on an open platform at the same time.

The first operating system may be a main operating system for providing a basic service of the broadcast receiving apparatus and a service corresponding to an installed application, and the second operating system may be a subsidiary operating system for checking whether the new application normally operates.

The second operating system may be a virtual operating system running on the first operating system.

A service installing method of a broadcast receiving apparatus having a first operating system and a second operating system, includes receiving a new application corresponding to a new service; installing the new application in the second operating system; determining whether the new application normally operates in the second operating system; and when the new application normally operates in the second operating system, installing the new application in the first operating system.

The determining may perform at least one of a first determination operation for determining whether the new application operates without error, a second determination operation for determining whether the new application complies with a preset security policy, a third determination operation for determining whether the new application complies with a preset General Public License (GPL) policy, and a fourth determination operation for determining whether the new application belongs to a preset black list.

The first determination operation may determine whether the new application forcibly quits, whether the new application forcibly quits a kernel of the second operating system, whether the new application excessively occupies a memory allocated to the second operating system, and whether the new application forcibly quits another application or applications installed in the second operating system.

The service installing method may further include when the new application is installed in the first operating system, deleting the new application installed in the second operating system.

The service installing method may further include storing the new application in a second storage region corresponding to the second operating system; and when the new application installed in the second operating system normally operates, storing the new application stored in the second storage region, in a first storage region corresponding to the first operating system. The installing may install the new application stored in the first storage region, in the first operating system.

The service installing method may further include adding the service corresponding to the new application into pre-stored list information of a service provided by the broadcast receiving apparatus.

The service installing method may further include displaying the list information. The displaying may also display information informing that the service corresponding to the new application is deactivated until the new application is installed to the first operating system.

The first operating system and the second operating system may run on an open platform at the same time.

The first operating system may be a main operating system for providing a basic service of the broadcast receiving apparatus and a service corresponding to an installed application, and the second operating system may be a subsidiary operating system for checking whether the new application normally operates.

The second operating system may be a virtual operating system running on the first operating system.

### BRIEF DESCRIPTION OF THE DRAWINGS

The above and/or other aspects will become more apparent by describing certain exemplary embodiments with reference to the accompanying drawings, in which:

FIG. 1 is a block diagram of a broadcast receiving apparatus according to an exemplary embodiment;

FIG. 2 is a diagram of operations of an open platform which runs with a plurality of operating systems according to an exemplary embodiment;

FIGS. 3 and 4 are diagrams of a user interface window displayable by the broadcast receiving apparatus;

FIG. 5 is a flowchart of a service installing method according to an exemplary embodiment;

FIG. 6 is a sequence diagram of the service installing method according to an exemplary embodiment; and

FIG. 7 is a sequence diagram of the service installing method according to another exemplary embodiment.

### DETAILED DESCRIPTION OF EXEMPLARY EMBODIMENTS

Certain exemplary embodiments will be described in greater detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the aspects of the exemplary embodiments with unnecessary detail.

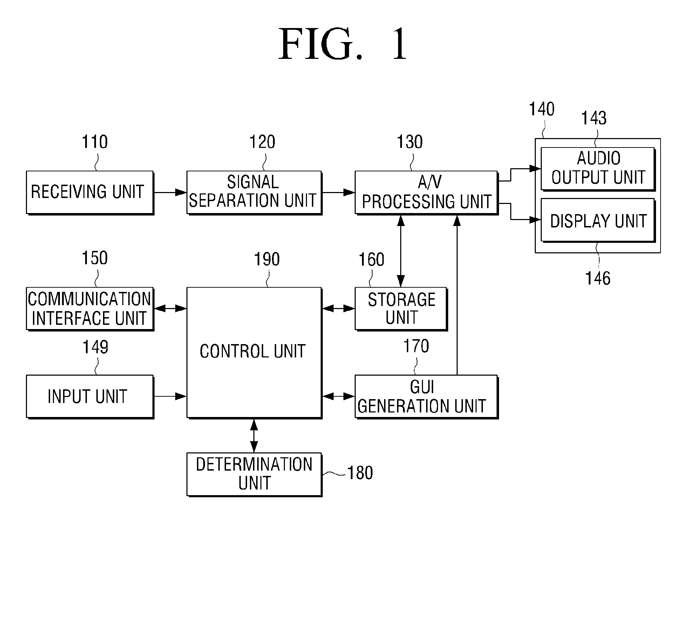

FIG. 1 is a block diagram of a broadcast receiving apparatus according to an exemplary embodiment.

The broadcast receiving apparatus 100, which is an apparatus capable of receiving and outputting a broadcast signal, can be implemented using, but not limited to, a digital TV. Note that the exemplary embodiments are applicable to any device capable of receiving the broadcast signal. For example, the broadcast receiving apparatus 100 can be implemented using a portable phone, a set-top box, Blue-ray player, a PMP, an MP3 player, a PC, and the like.

The broadcast receiving apparatus 100 can operate based on a first operating system and a second operating system which run on an open platform. Herein, the first operating system can be a main operating system providing a basic service of the broadcast receiving apparatus 100 and a service corresponding to an installed application, and the second operating system can be an subsidiary operating system for checking whether a new application normally operates. In so doing, the second operating system can be a virtual operating system which runs on the first operating system, or an operating system independent of the first operating system. While two operating systems are used in exemplary embodiments, three or more operating systems can run on the open platform and one of the operating systems can perform the same functions as the second operating system.

Referring to FIG. 1, the broadcast receiving apparatus 100 includes a receiving unit 110, a signal separation unit 120, an A/V processing unit 130, an output unit 140, an input unit 149, a communication interface unit 150, a storage unit 160, a GUI generation unit 170, a determination unit 180, and a control unit 190.

The receiving unit 110 receives and demodulates the broadcast from a broadcasting station or a satellite by wire or wirelessly. In detail, the receiving unit 110 can be implemented using at least one tuner. In some cases, the receiving unit 110 may include a plurality of tuners for receiving the broadcast signal over a plurality of channels at the same time.

The signal separation unit 120 divides the broadcast signal to a video signal, an audio signal, and broadcast information. In detail, the signal separation unit 120 can send the video signal and the audio signal to the A/V processing unit 130, and send the broadcast information to the storage unit 160, the GUI generator 170, and the control unit 190.

The A/V processing unit 130 applies signal processing such as video decoding, video scaling, and audio decoding, to the video signal and the audio signal received from the signal separation unit 120. The A/V processing unit 130 can also apply the signal processing such as video decoding, video scaling, and audio decoding, to contents received from the communication interface unit 150 and contents pre-stored to the storage unit 160.

The A/V processing unit 130 outputs the video signal to a display unit 146 and the audio signal to an audio output unit 143.

When the video signal and the audio signal are stored in the storage unit 160 or transferred to an external device (not shown) via the communication interface unit 150, the A/V processing unit 130 can output the video signal and the audio signal being compressed, to the communication interface unit 150 or the storage unit 160.

The output unit 140 includes the audio output unit 143 and the display unit 146.

The audio output unit 143 can output the audio output from the A/V processing unit 130 through a speaker or to an external device (e.g., an external speaker) connected via an external output port.

The display unit 146 can output the video output from the A/V processing unit 130 in a display or to an external device (e.g., an external display) connected via an external output port.

The display unit 146 can display menus generated by the GUI generation unit 170 in a screen.

The display unit 146 can display list information of the service provided by the broadcast receiving apparatus 100. In detail, based on pre-stored list information, the display unit 146 can display the available service of the broadcast receiving apparatus 100 in a list form or in an icon form. Thus, a user can select his/her desired service. Herein, the list information includes information of a service basically provided by the broadcast receiving apparatus 100, information of a service corresponding to the application installed in the first operating system, and information of a service corresponding to the application installed in the second operating system.

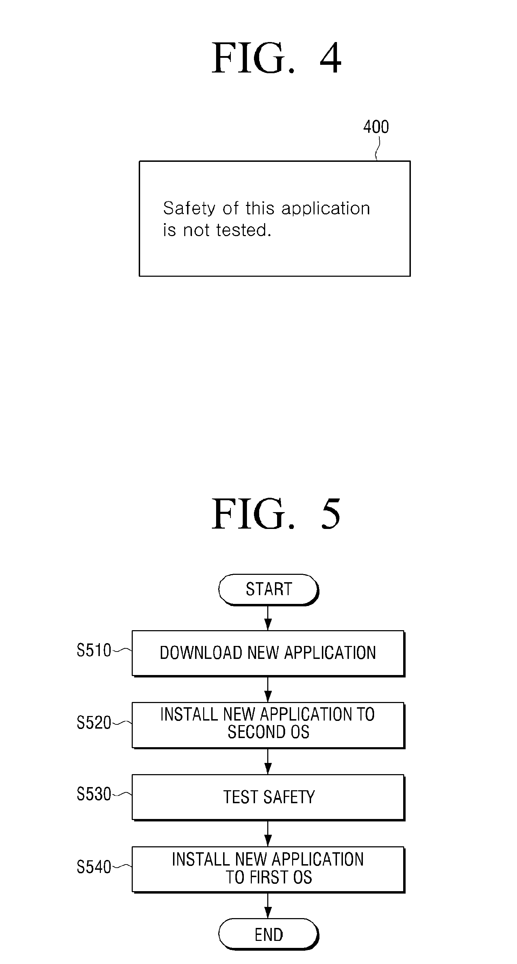

When displaying the list information, the display unit 146 can display the service corresponding to the application of which normal operation is not determined, in a deactivated form. For example, when displaying the service provided by the broadcast receiving apparatus 100 in the icon form, the display unit 146 can shade or black-and-white process the icon corresponding to the service of the untested safety. When the user selects the icon shaded or black-and-white processed, the display unit 146 can display a message window as shown in FIG. 4.

The input unit 149, for receiving a user's manipulation (e.g., a service selection command) can be implemented using a control panel including number buttons, channel search buttons (channel up button and channel down button), and a volume control button, or can function as a remote control receiver for receiving external remote control operation.

The input unit 149 sends the input user manipulation to the control unit 190.

The communication interface unit 150 is formed to connect the broadcast receiving apparatus 100 to an external device (not shown). The communication interface unit 150 can access an external server 10 not only over a Local Area Network (LAN) or Internet but also through a Universal Serial Bus (USB) port and a wireless communication scheme.

The communication interface unit 150 can receive contents from the external device, or send the broadcast signal processed by the A/V processing unit 130 to the external device.

The communication interface unit 150 can receive a new application from the external device. The communication interface unit 150 can receive a black list which is a list of applications forbidden to install into the broadcast receiving apparatus 100, from the external device or the Internet.

The storage unit 160 can store the broadcast signal processed by the A/V processing unit 130, or store the contents received via the communication interface unit 150. The storage unit 160 may store the broadcast information separated by the signal separation unit 120.

The storage unit 160 can store the received new application. In more detail, the storage unit 160 can include a first storage region corresponding to the first operating system and a second storage region corresponding to the second operating system. Hence, the storage unit 160 can selectively store the application received via the communication interface unit 150 in the first storage region corresponding to the first operating system, or in the second storage region corresponding to the second operating system.

When the new application received via the communication interface unit 150 is stored in the first storage region, the storage unit 160 can move the new application stored in the first storage region to the second storage region to test the safety of the new application. When the safety of the new application is confirmed, the storage unit 160 can move the new application from the second storage region, back to the first storage region.

When the new application received via the communication interface unit 150 is stored in the second storage region and the safety of the new application is confirmed, the storage unit 160 can move the new application to the first storage region.

The storage unit 160 can redundantly store the new application received via the communication interface unit 150 in the first storage region and the second storage region. After confirming the safety of the new application, the storage unit 160 can delete the new application stored in the second storage region.

The storage unit 160 can store list information. Herein, the list information is information relating to the service provided by the broadcast receiving apparatus 100, the service provided by the application installed in the first operating system, and the service provided by the application installed in the second operating system, and can be stored in the first storage region.

The storage unit 160 can store the black list which is the list of the applications forbidden to install to the broadcast receiving apparatus 100. The black list can be stored in the second storage region corresponding to the second operating system.

The GUI generation unit 170 can generate GUI to be displayed in the screen and add the generated GUI to the image output from the A/V processing unit 130.

The GUI generation unit 170 can generate the GUI for displaying the available services of the broadcast receiving apparatus 100. In detail, the GUI generation unit 170 can generate the GUI displaying the service basically provided by the broadcast receiving apparatus 100 and the service corresponding to the application installed in the first operating system, as the list or the icon.

The GUI generation unit 170 can generate a GUI deactivating the service corresponding to the application of which the safety is not yet tested. When the user selects the deactivated service, the GUI generation unit 170 can generate a GUI informing that the safety of the corresponding application is not tested.

The determination unit 180 tests the safety of the new application. In detail, the determination unit 180 installs the new application in the second operating system and tests the safety of the new application by determining whether the installed new application normally operates in the second operating system. Herein, the safety test according to an exemplary embodiment is explained in detail.

First, the determination unit 180 can perform a first safety test to determine whether the installed new application operates in the second operating system without error. More specifically, the determination unit 180 can carry out the first safety test by determining whether the new application installed in the second operating system operates during a preset time without force quit, whether the new application installed in the second operating system forcibly quits a kernel installed in the second operating system, whether the new application excessively occupies a memory allocated to the second operating system (for example, whether the new application occupies 100% of the memory allocated to the second operating system), and whether the new application installed in the second operating system forcibly quits other application installed in the second operating system. The determination unit 180 can determine that the corresponding new application does not operate normally, when the new application forcibly quits during the first safety test, the new application forcibly quits the kernel installed in the second operating system, the new application forcibly quits other applications, or the new application uses the memory 100%.

The determination unit 180 can perform a second safety test to determine whether the new application complies with a preset security policy. In detail, the determination unit 180 can perform the second safety test by determining whether the new application includes hacking tools and/or spyware. While this exemplary embodiment determines whether the new application includes only the hacking tool and the spyware, the exemplary embodiments are not limited thereto and an exemplary embodiment can determine whether the new application complies with a general security policy as in a general system together with this test. When the second safety test determines that the new application includes the hacking tool and the spyware, the determination unit 180 can determine that the corresponding new application does not operate normally.

The determination unit 180 can perform a third safety test to determine whether the new application complies with a preset General Public License (GPL) policy. In detail, the determination unit 180 can carry out the third safety test by checking whether the new application has GPL V3 license. Herein, the GPL is free software license created by Free Software Foundation. GPL V3 license which allows the user to easily modify the application.

The determination unit 180 performs a fourth safety test to determine whether the new application belongs to the black list. In detail, the determination unit 180 can perform the fourth safety test by checking whether the new application is registered to the pre-stored black list. The black list can be provided by a manufacturer.

While all four safety tests are conducted in this exemplary embodiment, the determination unit 180 can perform only some of the first through fourth safety tests, and/or may perform other safety test than the above-stated safety tests in the implementation.

The control unit 190 controls the components of the broadcast receiving apparatus 100. In detail, upon receiving the new application via the communication interface unit 150, the control unit 190 can control the determination unit 180 to test the safety of the received new application. When the new application is the normal safe application, the control unit 190 can install the new application in the first operating system. In so doing, the control unit 190 can delete the new application installed in the second operating system.

When the user selects the application installed in the first operating system, the control unit 190 can control the components of the broadcast receiving apparatus 100 to provide the service corresponding to the application.

As such, the broadcast receiving apparatus 100 tests the safety by previously installing the new application in other separate operating system rather than installing the new application in the main operating system immediately, and installs only the safe application to the main operating system. Thus, the safety of the system can be guaranteed.

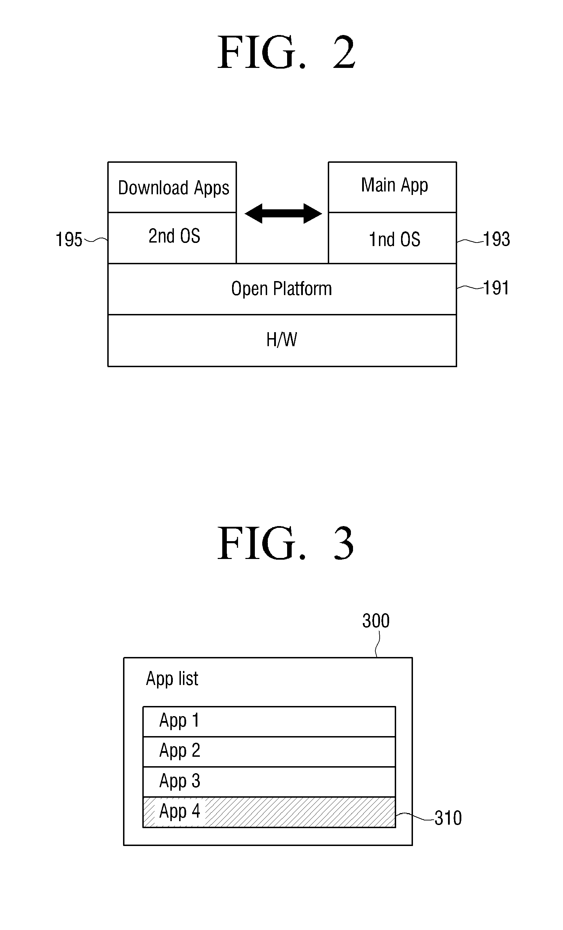

FIG. 2 is a diagram of operations of the open platform which runs with a plurality of operating systems according to an exemplary embodiment.

Referring to FIG. 2, two operating systems 193 and 195 simultaneously run on the open platform 191. Herein, the first operating system is the main operating system providing the basic service of the broadcast receiving apparatus 100 and the service corresponding to the installed application, and the second operating system is the subsidiary operating system for checking whether the new application normally operates. The operating systems 193 and 195 each have a distinguished memory region and a distinguished storage region. Since the operating systems 193 and 195 each have the distinguished memory region and the distinguished storage region, the first operating system 193 can normally function even when the second operating system 195 is shut down by the new application installed in the second operating system 195. The applications installed in the first operating system 193 are not affected by the new application.

FIGS. 3 and 4 depict a user interface window displayable by the broadcast receiving apparatus.

Referring to FIG. 3, the user interface window 300 displays the service corresponding to the applications installed to the first operating system 193 in the list form. The user interface window 300 can deactivate and display the new application of untested safety as shown in the region 310. While the corresponding region is illustrated as hatched to indicate the deactivation of the new application as illustrated in FIG. 3, the corresponding service region may be shaded and displayed, and/or can be deactivated and displayed in various other fashions.

When the user selects the deactivated region 310, a user interface window 400 of FIG. 4 can be displayed.

FIG. 5 is a flowchart of a service installing method according to an exemplary embodiment.

Referring to FIG. 5, the method receives the new application corresponding to the new service (S510). In detail, the method can receive the new service over the Internet, or receive the new application through a local network or a USB port.

The method installs the new application in the second operating system (S520). To test the safety of the new application, the method can install the new application in the second operating system which is the subsidiary operating system.

The method determines whether the new application normally runs on the second operating system (S530). The safety test of the new application has been explained in association with the determination unit 180 of FIG. 1, and further descriptions are omitted.

When the new application normally runs on the second operating system, the method installs the new application in the first operating system (S540). More specifically, upon confirming the safety of the new application, the method can install the new application in the first operating system and delete the new application installed in the second operating system.

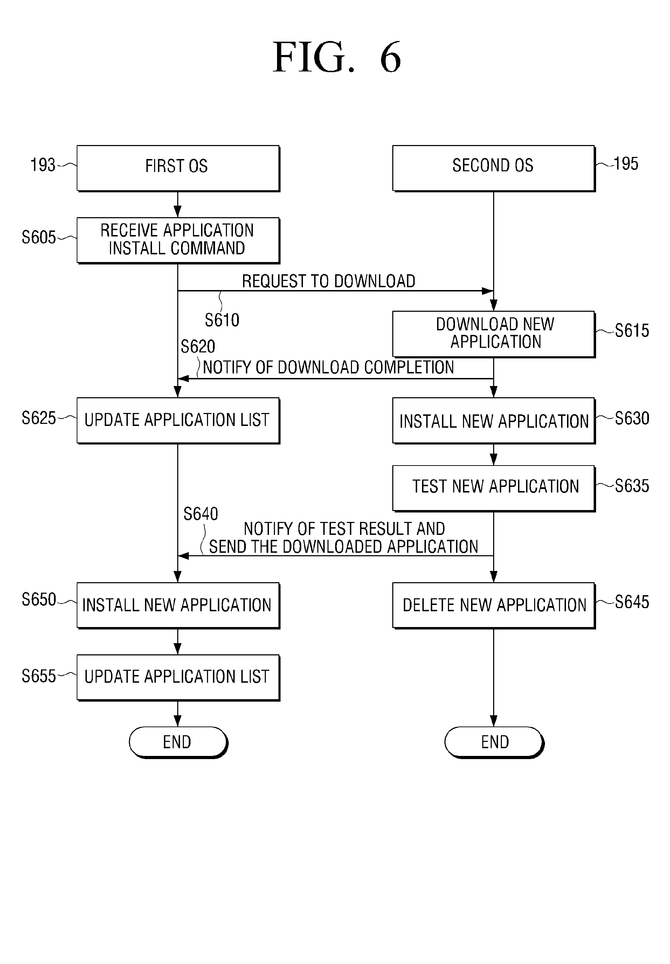

FIG. 6 is a sequence diagram of the service installing method according to an exemplary embodiment.

Upon receiving an application install command of the user (S605), the first operating system 193 requests the second operating system 195 to download the new application corresponding to the install command (S610).

The second operating system 195 receiving the downlink request can download the new application via the external device or the Internet (S615), and store the received new application in the second storage region corresponding to the second operating system.

Upon completing the download, the second operating system 195 notifies the first operating system 193 of the download completion of the corresponding application (S620). The first operating system 193 registers the downloaded new application to a service list (or an application list) as the deactivated application (S625). That is, the first operating system 193 updates the service list.

The second operating system 195 installs the downloaded new application (S630) and tests the safety to check whether the installed application normally operates (S635).

When completing the safety test, the second operating system 195 notifies the first operating system 193 of the test result for the installed application (S640). When determining that the new application is safe, the second operating system 195 can send the downloaded new application to the first operating system 193.

The second operating system 195 can delete the installed new application (S645).

Upon receiving the notification of the safe new application, the first operating system 193 can install the new application received from the second operating system 195 (S650) and update the service list to register the new application registered as the deactivated application, as the activated application (S655).

By contrast, when receiving the notification of the unsafe new application, the first operating system 193 can display information of the unsafe new application to the user.

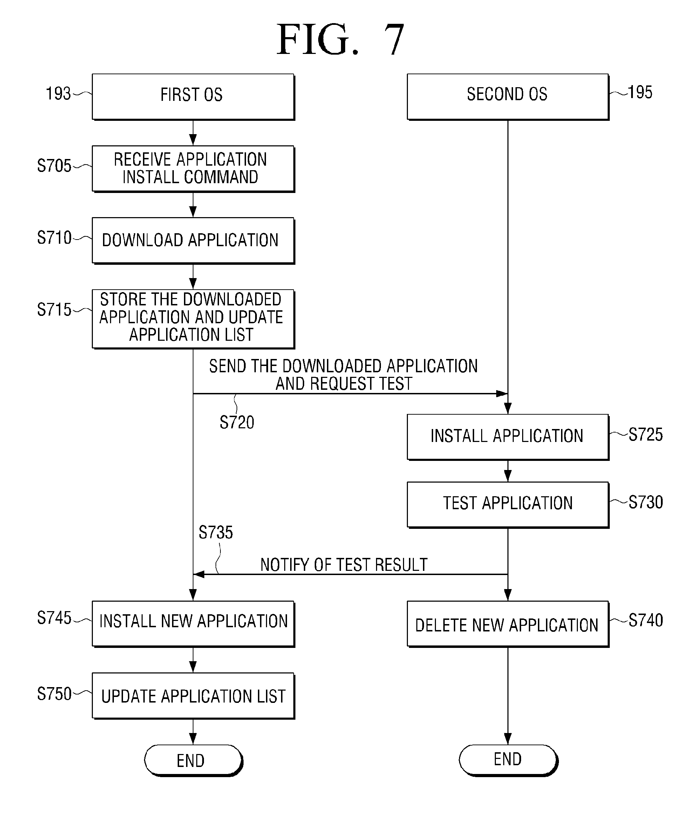

FIG. 7 is a sequence diagram of the service installing method according to another exemplary embodiment.

Upon receiving the application install command of the user (S705), the first operating system 193 can download the corresponding application via the external device or the Internet (S710), and store the received new application in the first storage region corresponding to the first operating system.

The first operating system 193 registers the downloaded new application to the service list (or the application list) as the deactivated application (S715).

Next, the first operating system 193 sends the downloaded new application to the second operating system 195 to test the safety of the downloaded new application, and requests the safety test (S720).

Upon receiving the new application, the second operating system 195 installs the received new application (S725) and tests the safety to check whether the installed application normally operates (S730).

When completing the safety test, the second operating system 195 notifies the first operating system 193 of the safety test result for the installed application (S735). The second operating system 195 can delete the installed new application (S740).

The first operating system 193 can install the safe new application (S745) and update the service list to register the new application registered as the deactivated application, as the activated application (S750).

By contrast, when receiving the notification of the unsafe new application, the first operating system 193 can display information of the unsafe new application to the user.

The service installing method according to the exemplary embodiments tests the safety by installing the new application to the separate subsidiary operating system, rather than installing the new application to the main operating system immediately, and installs only the safe application to the main operating system, thus guaranteeing the safety of the system. The service installing method of FIGS. 5, 6 and 7 can be carried out in the broadcast receiving apparatus constructed as shown in FIG. 1, and in other broadcast receiving apparatuses constructed differently.

The service installing method as stated above can be realized as at least one execution program for fulfilling the service installing method, and the execution program can be stored in a non-transitory computer-readable recording medium.

Accordingly, the blocks of the present disclosure can be realized as computer-recordable codes in the non-transitory computer-readable recording medium. The non-transitory computer-readable recording medium can be a device for storing data readable by a computer system.

For example, the non-transitory computer-readable recording medium can include ROMs, RAMs, CD-ROMs, magnetic tapes, floppy discs, optical discs, optical data storage devices, and image display apparatuses, such as TV, including the storage device. Also, the computer-readable code can be realized as a computer data signal of carrier.

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. A broadcast receiving apparatus having a first operating system and a second operating system, comprising:
a communication interface unit which receives a new application corresponding to a new service;
a determination unit which installs the new application to the second operating system and which determines whether the new application normally operates in the second operating system; and
a control unit which, when the new application normally operates in the second operating system, installs the new application in the first operating system.

2. The broadcast receiving apparatus of claim 1, wherein the determination unit performs at least one of a first determination operation for determining whether the new application operates without error, a second determination operation for determining whether the new application complies with a preset security policy, a third determination operation for determining whether the new application complies with a preset General Public License (GPL) policy, and a fourth determination operation for determining whether the new application belongs to a preset black list.

3. The broadcast receiving apparatus of claim 2, wherein the first determination operation determines whether the new application forcibly quits, whether the new application forcibly quits a kernel of the second operating system, whether the new application excessively occupies a memory allocated to the second operating system, and whether the new application forcibly quits another application or applications installed in the second operating system.

4. The broadcast receiving apparatus of one of claims 1 to 3, further comprising:
a storage unit which stores the new application in a second storage region corresponding to the second operating system,
wherein, when the new application installed in the second operating system normally operates, the control unit controls the storage unit to store the new application stored in the second storage region, in a first storage region corresponding to the first operating system.

5. The broadcast receiving apparatus of one of claims 1 to 4, wherein the control unit manages list information of services provided by the broadcast receiving apparatus, and adds the service corresponding to the new application into the list information.

6. The broadcast receiving apparatus of claim 5, further comprising:
a display unit which displays the list information,
wherein the control unit controls the display unit to display information informing that the service corresponding to the new application is deactivated until the new application is installed in the first operating system.

7. The broadcast receiving apparatus of one of claims 1 to 6, wherein the first operating system and the second operating system run on an open platform at a same time.

8. The broadcast receiving apparatus of one of claims 1 to 7, wherein the first operating system is a main operating system which provides a basic service of the broadcast receiving apparatus and a service corresponding to an installed application, and
the second operating system is a subsidiary operating system which checks whether the new application normally operates.

9. A service installing method of a broadcast receiving apparatus having a first operating system and a second operating system, the method comprising:
receiving a new application corresponding to a new service;
installing the new application in the second operating system;
determining whether the new application normally operates in the second operating system; and
when the new application normally operates in the second operating system, installing the new application in the first operating system.

10. The service installing method of claim 9, wherein the determining performs at least one of a first determination operation for determining whether the new application operates without error, a second determination operation for determining whether the new application complies with a preset security policy, a third determination operation for determining whether the new application complies with a preset General Public License (GPL) policy, and a fourth determination operation for determining whether the new application belongs to a preset black list.

11. The service installing method of claim 10, wherein the first determination operation determines whether the new application forcibly quits, whether the new application forcibly quits a kernel of the second operating system, whether the new application excessively occupies a memory allocated to the second operating system, and whether the new application forcibly quits another application or applications installed in the second operating system.

12. The service installing method of one of claims 9 to 11, further comprising:
storing the new application in a second storage region corresponding to the second operating system; and
when the application installed in the second operating system normally operates, storing the new application stored in the second storage region, in a first storage region corresponding to the first operating system,
wherein the installing installs the new application stored in the first storage region, in the first operating system.

13. The service installing method of one of claims 9 to 12, further comprising:
adding the service corresponding to the new application into pre-stored list information of a service provided by the broadcast receiving apparatus.

14. The service installing method of claim 13, further comprising:
displaying the list information,
wherein the displaying also displays information informing that the service corresponding to the new application is deactivated until the new application is installed in the first operating system.

15. The service installing method of one of claims 9 to 14, wherein the first operating system is a main operating system for providing a basic service of the broadcast receiving apparatus and a service corresponding to an installed application, and
the second operating system is a subsidiary operating system for checking whether the new application normally operates.
